(19) **Europäisches Patentamt**

**European Patent Office**

**Office européen des brevets**

(11) **EP 0 859 697 B1**

(12) **EUROPÄISCHE PATENTSCHRIFT**

(45) Veröffentlichungstag und Bekanntmachung des Hinweises auf die Patenterteilung:
**27.06.2001 Patentblatt 2001/26**

(21) Anmeldenummer: **97943810.8**

(22) Anmeldetag: **14.08.1997**

(51) Int Cl.⁷: $\text{B29C 55/16}$

(86) Internationale Anmeldenummer:
**PCT/EP97/04450**

(87) Internationale Veröffentlichungsnummer:
**WO 98/10914 (19.03.1998 Gazette 1998/11)**

(54) **LINEARMOTORGETRIEBENE TRANSPORTANLAGE**

CONVEYING SYSTEM DRIVEN BY A LINEAR MOTOR

INSTALLATION DE TRANSPORT ACTIONNEE PAR MOTEUR LINEAIRE

(84) Benannte Vertragsstaaten:
**BE CH DE FR GB IT LI**

(30) Priorität: **12.09.1996 DE 19637201**

(43) Veröffentlichungstag der Anmeldung:
**26.08.1998 Patentblatt 1998/35**

(73) Patentinhaber: **Brückner Maschinenbau GmbH
83313 Siegsdorf (DE)**

(72) Erfinder:
• **OEDL, Günter
A-5020 Salzburg (AT)**
• **ZINTZ, Wolfgang
D-83377 Vachendorf (DE)**

• **KREINER, Rudolph
D-83334 Inzell (DE)**

(74) Vertreter: **Flach, Dieter Dipl.-Phys. et al
Andrae Flach Haug
Adlzreiterstrasse 11
83022 Rosenheim (DE)**

(56) Entgegenhaltungen:
**DE-A- 4 427 604        US-A- 3 803 466
US-A- 4 769 580        US-A- 4 825 111**

• **COLVIN R: "MAGNETIC LINEAR DRIVE
INCREASES SPEED OF BIAXIAL ORIENTATION
UNIT" MODERN PLASTICS INTERNATIONAL,
Bd. 26, Nr. 3, 1.März 1996, Seite 26/27
XP000587688**

**Beschreibung**

Die Erfindung betrifft eine linearmotorgetriebene Transportanlage, insbesondere Simultanreckanlage nach dem Oberbegriff des Anspruches 1.

Linearmotorgetriebene Transportanlagen, insbesondere Reckanlagen, sind beispielsweise aus der US 5,072,493, der DE 29 30 534 A1, der DE 195 10 281 C1 sowie der US 5,036,262 oder der US 4,853,602 bekannt geworden.

Es kann sich dabei um synchron-, asynchron- oder auch hysterese-, motorbetriebene Linearantriebe handeln.

Bekanntermaßen werden dabei die umlaufenden Kluppenwagen ausgehend von einer Einlaufgeschwindigkeit in der Einlaufzone in der nachfolgenden Reckzone zunehmend stärker beschleunigt, wobei deren Abstand zueinander zunimmt. In einer üblicherweise darauffolgenden Entspannungs- oder Fixierzone wird die Kluppengeschwindigkeit geringfügig gegenüber der Geschwindigkeit am Ende der Reckzone verringert.

In der sich anschließenden Umlenkzone und vor allem auf der Rückführseite werden dann die Kluppenwagen wieder zunehmend stärker bis auf die Geschwindigkeit in der Einlaufzone gebremst.

Um entsprechende Folieneigenschaften zu erzielen, wird beim Betrieb der Anlage ein bestimmtes Geschwindigkeits-profil für die Folienseite vorgegeben, also für die Seite, auf der die Kluppenwagen den Rand der Folie ergreifen, festhalten und recken. Da bei laufender Produktion auch die Anlagengeschwindigkeit verändert werden können soll und dabei die Anzahl der Kluppenwagen während des Betriebs der Anlage konstant ist, muß von daher auch nach einer Änderung des Geschwindigkeitsprofils die folgende Beziehung gelten

$$\int_{x=0}^{x=L} (1/v)\ dx = \text{const.}$$

wobei

x = Position des Laufwagens
L = Länge einer Umrundung
v = Geschwindigkeit einer Kluppe am Ort x

ist.

Aufgrund dieser Beziehung ist das Prozeßleitsystem in der Lage, die notwendigen Verzögerungen in der Bremszone sowie die erforderliche Geschwindigkeit in der Transportzone für jeden Betriebszustand zu ermitteln.

Da also bei derartigen Transportanlagen die gesamte Anzahl der Kluppen vorgegeben ist und nur bei Stillstand der Anlage verändert werden kann und zudem die Anzahl der Kluppen auf der Prozeß- und Filmseite durch die vorgegebenen Prozeßbedingungen (nämlich Längsreckverhältnis) bereits vorgegeben ist, muß in Abhängigkeit davon die Differenz zur Gesamtzahl der Kluppen auf der Rückführseite der Anlage (nachdem die Kluppen den Folienrand freigegeben haben) entsprechend den Anlagebedingungen eingestellt und verändert werden. Um dabei auf der Rückfahrseite eine beliebige Anzahl von Kluppen unterbringen zu können, muß der durchschnittliche Abstand zwischen den Kluppen veränderbar sein, wobei dieser Abstand durch das Geschwindigkeitsprofil definiert wird, wie dies unter anderem in der US 4,825,111 beschrieben ist.

Bei der in der US 4,825,111 gezeigten Vorrichtung durchläuft jede Kluppe auf der Rückführseite drei Bereiche. Im ersten Bereich fahren die Kluppen mit konstanter Geschwindigkeit, die der Folienendgeschwindigkeit entspricht. Danach werden die Kluppenwagen in einer oder mehreren Stufen verzögert. Im dritten Bereich fahren die Kluppenwagen wieder mit konstanter Geschwindigkeit, die gleich der Einlaufgeschwindigkeit ist. Um auf der Rückfahrseite die mittleren Abstände der Kluppenwagen entsprechend einzustellen, werden die Grenzen zwischen den Bereichen verschoben. Dazu sind auf der gesamten Länge der Rückführung entsprechende Motoren vorgesehen, die in der Lage sind, die Kluppen abzubremsen und/oder den Transport der Kluppen weiter aufrecht zu erhalten.

Aufgabe der vorliegenden Erfindung ist es demgegenüber, ausgehend von dem vorstehend genannten Stand der Technik bei einer linearmotorgetriebenen Transportanlage die Bremsung der längs der linearmotorgetriebenen Transportanlage fortbewegten Wagen auf einer Rücklaufstrecke zu optimieren.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird es möglich, die installierte Motorleistung auf der Rücklaufstrecke durch eine optimierte Zonenaufteilung zu vermindern. Dadurch lassen sich die Kosten beim Bau einer Transportanlage und insbesondere bei Reckanlagen sowie der beim Betrieb einer derartigen Anlage benötigte Energieaufwand gegenüber herkömmlichen Lösungen vermindern.

Erfindungsgemäß wird dies dadurch ermöglicht, daß nur ein möglichst kurzer Teil der gesamten Rücklaufstrecke mit starken Motoren ausgestattet ist, um auf dieser vergleichsweise kurzen Teilstrecke eine nennenswerte Verzögerung zu ermöglichen. Eine entsprechende Ausstattung mit derartigen Motoren auf der gesamten oder fast der gesamten Rücklaufstrecke ist nicht mehr notwendig.

Erfindungsgemäß ist dazu die Rücklaufstrecke in zumindest drei ortsfeste Zonen gegliedert, nämlich eine erste Geschwindigkeitsänderungszone, eine Transportzone und eine Bremszone. Dabei wird die erste Geschwindigkeitsänderungszone in der Regel auch als Bremszone betrieben. Nur für die erste Geschwindigkeitsänderungszone (Beschleunigungs- oder Bremszone) und die als dritte Zone ausgebildete Bremszone sind nunmehr die zitierten Motoren zum Bremsen und Verzögern (oder Beschleunigen) der linearmotorgetriebenen Wagen und damit zur Aufnahme der entsprechende Kräfte notwendig und müssen dafür ausgelegt werden. Die Transportzone kann demgegenüber nur für die Überwindung der Reibungskräfte ausgelegt werden, wobei die Transportzone den Großteil der Rückführung der linearmotorgetriebenen Wagen oder Kluppen in Richtung Einlaufzone übernimmt.

In einer bevorzugten Ausführungsform der Erfindung ist vorgesehen, daß in Anpassung an unterschiedliche Anlagengeschwindigkeiten und/oder -reckverhältnisse vor allem in der ersten Geschwindigkeitsänderungszone die davon abhängige starke Bremsung der linearmotorgetriebenen Wagen oder Kluppenwagen vorgenommen wird. Aber auch in der nachfolgenden Transportzone kann in Abhängigkeit von dem Längsreckverhältnis und der Anlagengeschwindigkeit die Transportgeschwindigkeit vom Gesamtsystem unterschiedlich eingestellt werden. In der zweiten Bremszone werden unabhängig von der Anlagengeschwindigkeit und insbesondere im Fall einer Reckanlage von dem Längsreckverhältnis die linearmotorgetriebenen Wagen oder Kluppen vorzugsweise stets auf ein gleiches Vorschub-Geschwindigkeitsprofil abgebremst und weitertransportiert.

Schließlich wird auch darauf hingewiesen, daß die linearmotorgetriebenen Wagen oder Kluppenwagen in der ersten Geschwindigkeitsänderungszone nochmals auf eine höhere Geschwindigkeit beschleunigt werden könnten, um dann in der erwähnten Bremszone auf Einlaufgeschwindigkeit verzögert zu werden. Dies hätte den Vorteil, daß aufgrund der höheren mittleren Geschwindigkeit der Kluppen während des Umlaufes eine geringe Anzahl von Kluppen in Systemen notwendig wäre. In diesem Fall könnte aber die starke Verzögerung in der dann alleinigen Bremszone zu zu großen mechanischen Belastungen der linearmotorgetriebenen Wagen oder Kluppenwagen führen, insbesondere dann, wenn eine endgültige Bremsung durch Auflaufen oder Zusammenstoßen der linearmotorgetriebenen Wagen oder Kluppen in der Bremszone erfolgt.

Vorteilhafterweise bestehen die Antriebseinrichtungen in der Geschwindigkeitsänderungszone und/oder Bremszone aus starken Linearmotoren, insbesondere Synchronlinearmotoren. Da synchrone Linearantriebe wesentliche Vorzüge in der Reckzone haben und es unter anderem aus wirtschaftlichen Gründen von Vorteil ist, ein durchgängiges Antriebsprinzip über die gesamte Anlage vorzusehen, ist es zweckmäßig, die Synchronantriebe auch auf der Rücklaufstrecke vorzusehen. Alternativ ist es jedoch ohne weiteres auch möglich, Linearantriebe zu verwenden, die nach dem Asynchron- oder Hysteresemotorprinzip arbeiten.

Die Erfindung wird nachfolgend anhand eines Ausführungsbeispiels näher erläutert. Dabei zeigen im einzelnen

Figur 1 : eine schematische Draufsicht auf eine Transportanlage mit Geschwindigkeitsdiagramm für die Rücklaufstrecke, und

Figur 2 : ein Diagramm zur Erläuterung der Kluppengeschwindigkeit über die gesamte Umlaufstrecke.

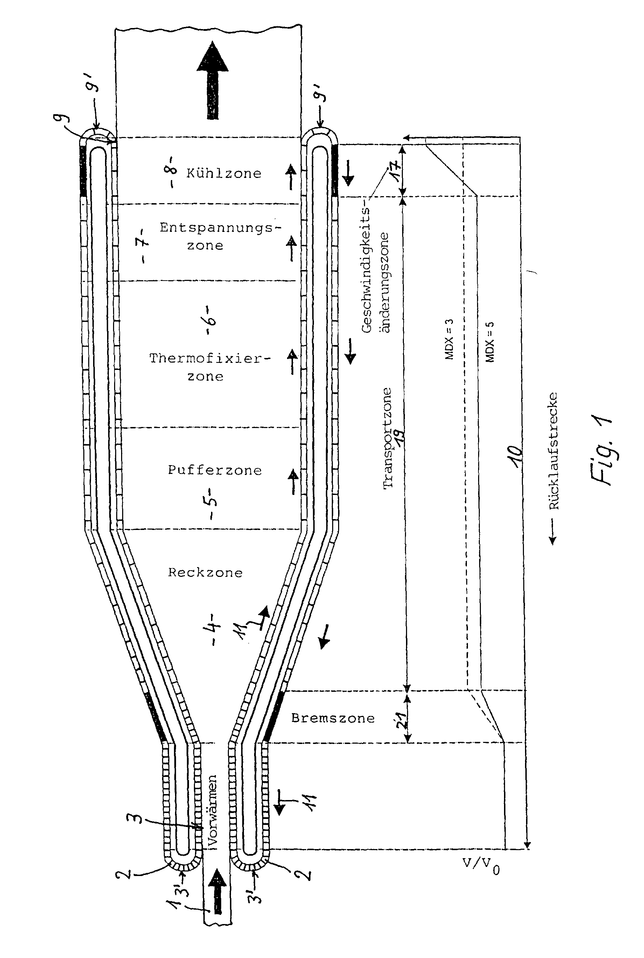

In Figur 1 ist in schematischer Draufsicht eine Transportanlage mit zwei geschlossenen Kluppenumlaufbahnen 2 gezeigt, die symmetrisch zu einer Mittellängsachse der Anlage angeordnet sind. Die Kluppenumlaufbahnen 2 dienen zum Führen von (nicht gezeigten) Kluppenwagen, die in Pfeilrichtung 11 umlaufen und Kluppen tragen, die zum Ergreifen und Transport eines Kunststoffilms 1 verwendet werden. Der üblicherweise von einer Breitschlitzdüse über eine Kühlwalze kommende Kunststoffilm 1 wird auf der Eingangsseite der Transportanlage einer Einlaufzone 3 zugeführt, wo der Kunststoffilm 1 von den Kluppen ergriffen wird und eine Vorerwärmung stattfindet. Nach der Einlaufzone 3 wird der Kunststoffilm 1 in einer Reckzone 4 in Längs- und Querrichtung simultan gereckt. Danach wird der Kunststoffilm 1 in einer sogenannten Pufferzone 5 für eine gewisse Verweilzeit auf Temperatur gehalten, um dann kurzzeitig in einer Thermofixierzone 6 bei relativ hoher Temperatur thermofixiert zu werden. In der darauffolgenden Entspannungszone 7 kann der Kunststoffilm 1 in beiden Achsen geringfügig relaxieren. Dies wird durch eine leicht zusammenlaufende Schienenstellung der Kluppenumlaufbahnen 2 erreicht, wobei gleichzeitig der Kluppenabstand verringert wird. Danach wird der Kunststoffilm 1 in einer Kühlzone 8 in einem kalten Luftstrom gekühlt. Am Auslaufende 9 wird dann der gereckte Kunststoffilm 1 von den Kluppen freigegeben und von (nicht gezeigten) Walzen für den weiteren Prozeß übernommen.

Die Fortbewegung und Beschleunigung der Kluppenwagen erfolgt von der Einlaufzone 3 kommend in den oben erwähnten Zonen 4 bis 8 mittels Linearmotoren, wie dies unter anderem in den eingangs genannten Vorveröffentlichungen beschrieben ist, auf deren Offenbarungsgehalt in vollem Umfang Bezug genommen wird.

Unter einer nachfolgenden Rücklaufstrecke 10 im weiteren Sinne wird die Wegstrecke verstanden, auf der sich die linearmotorgetriebenen Wagen oder Kluppenwagen von ihrem Auslaufende 9 in welchem sie den eingespannten Kunststoffilmrand freigegeben haben, bis zur Einlaufzone 3 zurückbewegen.

Im engeren Sinne werden unter der Rücklaufstrecke 10 die im wesentlichen gerade verlaufenden Wegstrecken zwischen dem Umlenkbereich 9' des Auslaufendes 9 und dem Umlenkbereich 3' der Einlaufzone 3 verstanden.

Diese Rücklaufstrecke 10 ist nunmehr in zumindest drei weitere Zonen gegliedert, nämlich eine erste Geschwindigkeitsänderungszone 17, die in einem ersten Ausführungsbeispiel als erste Bremszone ausgebildet ist, eine nachfolgende Transportzone 19 und eine darauf folgende weitere zweite Bremszone 21.

Lediglich in der ersten und zweiten Bremszone 17, 21 sind auf einer vergleichsweise kurzen Wegstrecke bezogen auf die gesamte Rücklaufstrecke 10 entsprechend starke Bremsmotoren vorgesehen, um die entsprechend notwendige Verzögerung und Bremsung der mit höherer Geschwindigkeit einlaufenden Kluppen durchzuführen.

Als Bremsmotoren können insbesondere Linearmotoren verwendet werden. Alternativ oder zusätzlich zu derartigen Linearmotoren können jedoch auch mechanische oder berührungslose Wirbelstrombremsen für Verzögerungen eingesetzt werden.

Eine Wirbelstrombremse kann beispielsweise so ausgeführt werden, daß an dem bewegten Kluppenwagen eine Reaktionsfläche aus elektrisch und magnetisch leitenden Materialien, z.B. einen Verbund aus einer Kupfer- und einer Stahlplatte, angebracht ist. Auf dem feststehenden Teil des Transportsystems wären in diesem Fall Permanent- oder Elektromagnete angebracht. Die Bremskraft kann dann z.B. durch Veränderung des Abstandes zwischen Magnet und bewegtem Reaktionsteil eingestellt werden. Im Falle eines Elektromagneten kann dies durch die Steuerung des Spulenstroms erfolgen.

Die erhöhte Kraft der Linearmotoren beim Verzögern der Kluppenwagen in der ersten und zweiten Bremszone 17, 21 (bzw. beim Beschleunigen in der ersten Geschwindigkeitsänderungszone 17 gemäß einer Ausführungsvariante) kann auch durch Hinzufügen weiterer Primärteile, die an entsprechenden Wirkflächen der einzelnen Kluppenwagen angreifen, erreicht werden. So ist es beispielsweise möglich, in den beiden Bremszonen 17, 21 eine beidseitige Anordnung derartiger Primärteile vorzunehmen, während die Transportzone nur einseitig, z.B. nur unten, mit Primärteilen versehen wird. Durch eine doppelseitige Anordnung der Linearantriebe kann in den Bremszonen 17, 21 die Bremsleistung um 100% gegenüber der Transportzone 19 gesteigert werden.

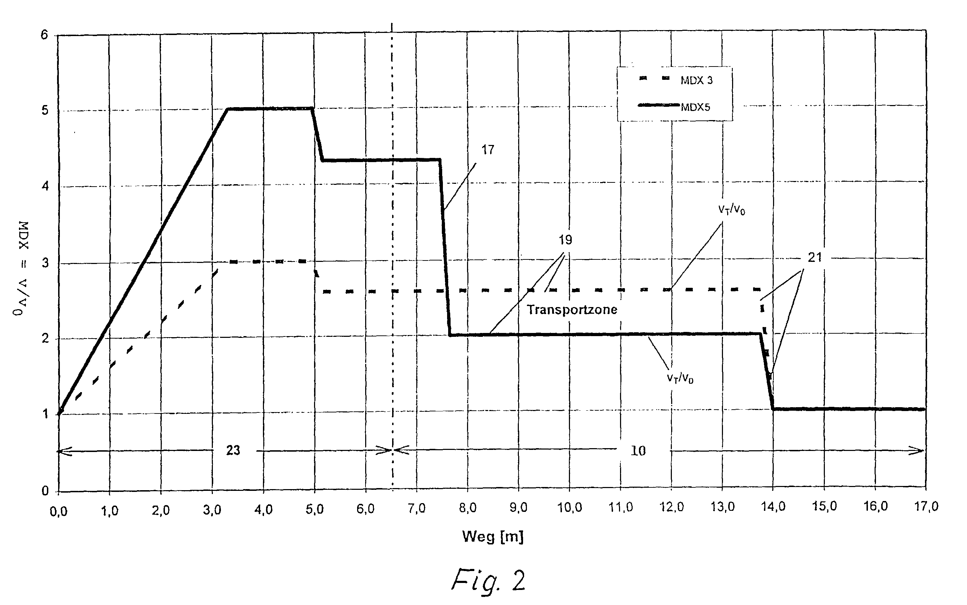

Ein Geschwindigkeitsdiagramm ist in schematischer Weise in Figur 2 dargestellt, wobei auf der Abzisse die gesamte Wegstrecke einer umlaufenden Kluppenbahn wiedergegeben und auf der Ordinate das Verhältnis der aktuellen Kluppengeschwindigkeit $v$ zur Kluppen-Einlaufgeschwindigkeit $v_0$ als MDX eingezeichnet ist. Es sind zwei unterschiedliche Profile dargestellt, nämlich ein durchgezogenes Geschwindigkeitsprofil MDX5 mit höheren Reckverhältnissen und höheren Kluppenwagen-Ges-chwindigkeiten, insbesondere am Ende der Reckzone 4. Das zweite in Figur 2 strichliert eingezeichnete Geschwindigkeits-Profil MDX3 zeigt eine andere Einstellung der Anlage mit geringeren Reckwerten und geringeren maximalen Kluppengeschwindigkeiten.

Weiterhin ist im Diagramm gemäß Figur 2 die sogenannte Folienseite, d.h., die Wegstrecke von der Einlaufzone 3 bis zum Auslaufende 9, auf welcher die Kluppenwagen den Rand des Kunststoffilms 1 ergreifen, festhalten und fortbewegen, mit dem Bezugszeichen 23 versehen. Das daran anschließende Geschwindigkeitsprofil in der Rücklaufzone 10 ist der Übersichtlichkeit halber auch auf der Unterseite in Figur 1 abgebildet, um die Zuordnung zu den einzelnen Zonen zu verdeutlichen. Ferner ist zu beachten, daß sich die Längenangaben auf der Abszisse von Figur 2 lediglich auf eine stark verkürzte Testanlage beziehen. Die in der Praxis üblicherweise verwendeten Transportanlagen weisen normalerweise wesentlich längere Umlaufwege auf.

Aus Figur 2 ist ersichtlich, daß von der Einlaufzone 3 beginnend die Geschwindigkeit in der Reckzone 4 bis zu einer maximalen Geschwindigkeit zunimmt, dann über eine gewisse Wegstrecke konstant gehalten wird, um in der Entspannungszone 7 wieder geringfügig verringert zu werden.

Auf der Rücklaufstrecke 10 werden nunmehr gemäß Geschwindigkeitsprofil MDX 5 die Kluppen in der ersten Bremszone 17 durch die dort vorgesehenen installierten Motoren stark abgebremst, und zwar bis auf eine Geschwindigkeit $v_T$, d.h. der Geschwindigkeit in der Transportzone 19.

In der Transportzone 19 sind ansonsten nur schwach dimensionierte Linearmotorantriebe vorgesehen, denen nur so viel Energie zugeführt werden muß, daß die Reibungskräfte der fortbewegten Kluppenwagen überwunden werden und die Kluppenwagen im gezeigten Ausführungsbeispiel mit praktisch konstanter Geschwindigkeit geordnet bis zur nächsten Bremszone 21 fortbewegt werden können.

Auch in der zweiten Bremszone 21 sind auf einer vergleichsweise kurzen Wegstrecke, bezogen auf die gesamte Rücklaufstrecke 10, ebenfalls weitere starke Motoren installiert, die nunmehr eine weitere vergleichsweise abrupte Bremsung auf die Einlaufgeschwindigkeit $v_0$ oder nur geringfügig darüber vornehmen.

Die Länge der ersten und zweiten Bremszone 17 bzw. 21 bezogen auf die gesamte Länge der Rücklaufstrecke 10 beträgt jeweils weniger als 20% der gesamten Länge der Rücklaufstrecke 10, vorzugsweise sogar weniger als 10%. Im gezeigten Ausführungsbeispiel ist die Länge der ersten oder zweiten Bremszone 17, 21, bezogen auf die gesamte Länge der Rücklaufstrecke 10, kleiner als 5%. In absoluten Werten bedeutet dies, daß die Länge der ersten oder zweiten Bremszone 17, 21 jeweils beispielsweise nur 2 m beträgt, wobei diese Länge auch deutlich kürzer als 2 m, beispielsweise 1 m oder 0,5 m, ausgeführt sein kann. Starke Motoren mit einer auf die Rücklaufstrecke bezogenen wirksamen Länge von weniger als 50 cm, 40 cm oder 30 cm sind möglich.

Insbesondere bei dem zweiten strichliert gezeigten Diagramm ist ersichtlich, daß aufgrund der niedrigeren Kluppengeschwindigkeiten am Ende der Reckzone 4 und vor allem im Bereich der Entspannungszone 7 ggf. auf eine Abbremsung der Kluppenwagen in der ersten Bremszone 17 sogar ganz verzichtet werden kann, um die Kluppenwagen von der Entspannungszone 7 mit mehr oder weniger gleicher konstanter Geschwindigkeit über die Transportzone 19 hinweg der zweiten Bremszone 21 zuzuführen. Im Bereich der zweiten Bremszone 21 werden auch bei diesem Ausführungsbeispiel die Kluppenwagen dann auf die zuvor erwähnte Einlaufgeschwindigkeit $v_0$ abgebremst.

Durch Veränderung der Anlagengeschwindigkeiten und des Reckverhältnisses, d.h. insbesondere des Längsreckverhältnisses auch bei laufender Anlage kann von der Systemsteuerung die entsprechende Abbremsung der Kluppenwagen in der ersten und zweiten Bremszone und die Einstellung eines bestimmten Geschwindigkeitsprofils in der Transportzone selbsttätig vorgenommen und angepaßt werden.

Abweichend von den in den Diagrammen gemäß Figur 2 und Figur 1 wiedergegebenen Geschwindigkeits-Profilen ist es grundsätzlich auch denkbar, daß die Kluppenwagen beispielsweise in der ersten Zone 17 (die deshalb allgemein nicht als Bremszone, sondern als Geschwindigkeitsänderungszone bezeichnet ist) nochmals auf eine höhere Geschwindigkeit beschleunigt werden, um dann wieder in der zweiten Bremszone 21 von ihrer Geschwindigkeit in der Transportzone 19 auf die Einlaufgeschwindigkeit verzögert zu werden. Dies hat den Vorteil, daß aufgrund höherer mittlerer Geschwindigkeiten der Kluppenwagen während eines Umlaufs nur eine geringere Anzahl von Kluppen im Gesamtsystem notwendig sind. Allerdings ist bei vorgegebener Gesamtlänge der Umlaufbahn durch die Kluppen die Verwendung einer vergleichsweise höheren Anzahl von Kluppenwagen vorzuziehen, damit die Verzögerung in der zweiten Bremszone 21 nicht zu große Werte aufweist. Denn insbesondere die zweite Bremszone 21 kann so ausgelegt sein, daß die Abbremsung auf die Einlaufgeschwindigkeit durch mechanisches Aufprallen eines auflaufenden Kluppenwagens auf einen zuvor gebremsten Kluppenwagen bewirkt wird, wodurch durch diese heftigen Zusammenstöße natürlich vergleichsweise große mechanische Belastungen auftreten können.

**Patentansprüche**

**1.** Linearmotorgetriebene Transportanlage, insbesondere linearmotorgetriebene Simultanreckanlage, bei welcher linearmotorgetriebene Wagen oder Kluppenwagen auf einer umlaufenden Bahn fortbewegt werden, wobei auf einer Rücklaufstrecke (10) zwischen einer Auslaufzone (9) und einer Einlaufzone (3) Antriebseinrichtungen für die Wagen oder Kluppenwagen , insbesondere zur Bremsung vorgesehen sind, **dadurch gekennzeichnet,** daß die Rücklaufstrecke (10) zumindest drei Zonen aufweist, nämlich in Laufrichtung gesehen eine erste Geschwindigkeitsänderungszone (17), eine nachfolgende Transportzone (19) und eine darauffolgende Bremszone (21), wobei die Länge der Geschwindigkeitsänderungszone (17) und der Bremszone (21) zusammen kleiner als 40% der Gesamtlänge der Rücklaufstrecke (10) ist, und daß in der Geschwindigkeitsänderungszone (17) und/oder Bremszone (21) im Vergleich zum übrigen Teil der Rücklaufstrecke (10) stärkere Antriebseinrichtungen vorgesehen sind, um die Wagen oder Kluppenwagen dort einer stärkeren Geschwindigkeitsänderung zu unterwerfen.

**2.** Transportanlage nach Anspruch 1, **dadurch gekennzeichnet,** daß die Länge der Geschwindigkeitsänderungszone (17) und der Bremszone (21) jeweils kleiner als 20%, vorzugsweise kleiner als 10% und insbesondere kleiner als 5%, bezogen auf die Gesamtlänge der Rücklaufstrecke (10) ist.

**3.** Transportanlage nach Anspruch 1 oder 2, **dadurch gekennzeichnet**, daß die Antriebseinrichtungen in der Geschwindigkeitsänderungszone (17) und/oder Bremszone (21) aus starken Linearmotoren, insbesondere Synchronlinearmotoren, bestehen.

**4.** Transportanlage nach einem der vorhergehenden Ansprüche, **dadurch gekennzeichnet,** daß in der Geschwindigkeitsänderungszone (17) und/oder Bremszone (21) mechanische oder berührungslose Wirbelstrombremsen alternativ oder zusätzlich zu Linearmotoren vorgesehen sind.

**5.** Transportanlage nach Anspruch 4, **dadurch gekennzeichnet**, daß die Wirbelstrombremse aus einem stationär angebrachten Permanent- oder Elektromagneten besteht, der mit an den Wagen befestigten Bremselementen aus elektrisch leitendem und/oder ferromagnetischem Material zusammenwirkt.

**6.** Transportanlage nach Anspruch 3, **dadurch gekennzeichnet,** daß entlang der Bewegungsbahn der Wagen zusätzliche Primärteile vorsehbar sind, die an entsprechenden Wirkflächen der Wagen angreifen und in diesem Bereich die Kraft der Linearmotoranordnung erhöhen.

**7.** Transportanlage nach einem der vorhergehenden Ansprüche, **dadurch gekennzeichnet,** daß mit der in der Geschwindigkeitsänderungszone (17) vorgesehenen Antriebseinrichtung die Wagen oder Kluppenwagen vorwählbar beschleunigt und abgebremst werden können.

8. Transportanlage nach einem der vorhergehenden Ansprüche, **dadurch gekennzeichnet,** daß die Antriebseinrichtung in der Transportzone (19) so ausgelegt ist, daß die Wagen oder Kluppenwagen in diesem Bereich mit konstanter Geschwindigkeit oder im wesentlichen konstanter Geschwindigkeit bis zur Bremszone (21) fortbewegbar sind.

9. Transportanlage nach einem der vorhergehenden Ansprüche, **dadurch gekennzeichnet,** daß die Leistung der Antriebseinrichtung in der Geschwindigkeitsänderungszone (17) und/oder Bremszone (21) um 100% größer ist als in der dazwischenliegenden Transportzone (19).

**Claims**

1. A linear motor driven conveying arrangement and more especially a linear motor driven simultaneous stretching arrangement, in the case of motor driven carriages or tenter carriages are caused to progress on a track in the form of a loop and on a return track (10) between an exit zone (9) and an entry zone (3) drive means are provided for the carriages or tenter carriage, more particularly for retardation, characterized in that the return path (10) possesses at least three zones, namely , as seen in the direction of travel, a first speed modifying zone (17), a following conveying zone (19) and a following retardation zone (21), the length of the speed modifying zone (17) and of the retardation zone (21) taken together is smaller than the 40% of the overall length of the return path (10) and in that in the speed modifying zone (17) and/or the retardation zone (21) more powerful drive means are provided than in the remaining part of the return path (10) in order to subject the carriages or tenter carriages to a greater change in speed.

2. The conveying arrangement as claimed in claim 1, characterized in that the length of the speed modifying zone (17) and of the retardation zone (21) is respectively smaller than 20%, and preferably smaller than 10% and more particularly one than 5% of the overall length of the return path (10).

3. The conveying arrangement as claimed in claim 1 or in claim 2, characterized in that the drive means in the speed modifying zone (17) and/or the retardation zone (21) comprise powerful linear motors and more particularly synchronous linear motors.

4. The conveying arrangement as claimed in either of the preceding claims, characterized in that in the speed modifying zone (17) and/or the retardation zone (21) mechanical or contactless eddy current brakes are provided alternatively or in addition to linear motors.

5. The conveying arrangement as claimed in claim 4, characterized in that the eddy current brake includes a stationarily arranged permanent magnet or an electromagnet, which cooperates with brake elements attached to the carriage of electrically conducting and/or ferromagnetic material.

6. The conveying arrangement as claimed in claim 3, characterized in that along the track of motion of the carriages additional primary parts are able to be provided, which cooperate with corresponding working faces of the carriages and in this region increases force of the linear motor arrangement.

7. The conveying arrangement as claimed in any one of the preceding claims, characterized in that the carriages or tenter carriages may be accelerated or retarded in a predetermined manner with the drive means provided in the speed modifying zone (17).

8. The conveying arrangement as claimed in any one of the preceding claims, characterized in that the drive means in the conveying zone (19) is so designed that the carriages or tenter carriages are caused to progress in this region at a constant speed or a substantially constant speed as far as the retardation zone (21).

9. The conveying arrangement as claimed in any one of the preceding claims, characterized in that the power possible drive means in the speed modifying zone (17) and/or in the retardation zone (21) is 100% higher than in the intermediately placed conveying zone (19).

**Revendications**

1. Installation de transport entraînée par moteur linéaire, en particulier installation d'étirage simultané entraînée par moteur linéaire, dans laquelle des chariots ou des chariots à pince entraînés par moteur linéaire se déplacent sur une voie en recirculation, et dans laquelle sur un trajet de retour (10) entre une zone de sortie (9) et une zone d'entrée (3) sont prévus des dispositifs d'entraînement pour les chariots ou les chariots à pince, en particulier pour le freinage,
caractérisée en ce que le trajet de retour (10) comprend au moins trois zones, à savoir, vues dans la direction de déplacement, une première zone de variation de vitesse (17), une zone de transport (19) qui la suit, et une zone de freinage (21) à la suite de celle-ci, la longueur de la zone de variation de vitesse (17) et de la zone de freinage (21) ensemble étant plus petite que 40 % de la longueur totale du trajet de retour (10), et en ce que, par comparaison à la partie restante du trajet de retour (10), des dispositifs d'entraînement plus forts sont prévus dans la zone de variation de vitesse (17) et/ou dans la zone de freinage (21) afin de soumettre dans ces zones les chariots ou les chariots à pince à une variation de vitesse plus forte.

2. Installation de transport selon la revendication 1, caractérisée en ce que la longueur de la zone de variation de vitesse (17) et de la zone de freinage (21) sont respectivement inférieures à 20 %, de préférence inférieures à 10 %, et en particulier inférieures à 5 % par rapport à la longueur totale du trajet de retour (10).

3. Installation de transport selon l'une ou l'autre des revendications 1 et 2, caractérisée en ce que les dispositifs d'entraînement dans la zone de variation de vitesse (17) et/ou dans la zone de freinage (21) sont constitués par des moteurs linéaires puissants, en particulier par des moteurs linéaires synchrones.

4. Installation de transport selon l'une des revendications précédentes, caractérisée en ce qu'il est prévu, en remplacement ou en supplément des moteurs linéaires, des moteurs à courant Foucault de mécaniques ou sans contact dans la zone de variation de vitesse (17) et/ou dans la zone de freinage (21).

5. Installation de transport selon la revendication 4, caractérisée en ce que le frein à courant de Foucault comprend un aimant permanent ou un électroaimant monté stationnaire, qui coopère avec des éléments de freinage fixés sur le chariot, en matériau conducteur de l'électricité et/ou en matériau ferromagnétique.

6. Installation de transport selon la revendication 3, caractérisée en ce qu'il est prévu des parties primaires additionnelles le long de la voie de transport des chariots, lesdites parties attaquant des surfaces d'action correspondantes des chariots et augmentant dans cette région la force de l'agencement à moteur linéaire.

7. Installation de transport selon l'une des revendications précédentes, caractérisée en ce qu'au moyen des dispositifs d'entraînement prévus dans la zone de variation de vitesse (17) il est possible d'accélérer et de freiner de manière présélectionnée les chariots ou les chariots à pince.

8. Installation de transport selon l'une des revendications précédentes, caractérisée en ce que les dispositifs d'entraînement dans la zone de transport (17) sont ainsi conçus que les chariots ou les chariots à pince dans cette région sont susceptibles de se déplacer à vitesse constante, ou à vitesse sensiblement constante jusqu'à la zone de freinage (21).

9. Installation de transport selon l'une des revendications précédentes, caractérisée en ce que la puissance des dispositifs de transport d'entraînement dans la zone de variation de vitesse (17) et/ou dans la zone de freinage (21) est supérieure de 100 % à celle dans la zone de transport interposée (19).

Fig. 1

Fig. 2